# EUROPEAN PATENT SPECIFICATION

(11) **EP 1 128 047 B1**
(45) Date of publication and mention of the grant of the patent: **16.11.2005**
(21) Application number: 01104134.0
(22) Date of filing: 21.02.2001
(51) Int. Cl.: F02D 41/34

(54) **Cylinder discrimination device and cylinder discrimination method of engine**
System und Verfahren zur Zylinderidentifikation in einer Brennkraftmaschine
Système et méthode d'identification de cylindre d'un moteur à explosion

(30) Priority: 22.02.2000 JP 2000044554; 22.02.2000 JP 2000044553
(43) Date of publication of application: 29.08.2001
(73) Proprietor: Hitachi, Ltd., Tokyo 100-8280 (JP); NISSAN MOTOR CO., LTD., Yokohama-shi Kanagawa-ken (JP)
(72) Inventor: Shimizu, Hirokazu, c/o Unisia Jecs Corporation, Atsughi-shi, Kanagawa-ken (JP); Shimizu, Noriaki, Fujisawa-shi, Kanagawa-ken (JP)
(74) Representative: Grünecker, Kinkeldey, Stockmair & Schwanhäusser Anwaltssozietät

(56) References cited:
- EP-A- 0 582 430
- DE-A- 19 903 549
- US-A- 6 016 789

## Description

The present invention relates to a cylinder discrimination device of an engine according to the preamble of independent claim 1 and to a cylinder discrimination method of an engine according to the preamble of independent claim 12. Such a cylinder discrimination device of an engine and such a cylinder discrimination method of an engine can be taken from prior art document US 6,016,789.

As the conventional cylinder discrimination device, there is known such a device in which cylinder discrimination signals of the number corresponding to the number of cylinders are output from a cam sensor during an output of reference crank angle signal from a crank angle sensor, to perform cylinder discrimination (Japanese Unexamined Patent Publication No. 5-106500).

However, in a 6-cylinder engine for example, there is a need to provide to a signal plate for outputting cylinder discrimination signals a maximum of six units to be detected during the output of reference crank angle signal. The problem of this conventional device is that the signal plate cannot be miniaturized, especially for a construction in that a magnetic sensor is used to detect projections formed thereto.

Therefore, there is considered a cylinder discrimination device having a plurality of cam sensors provided in correspondence to a plurality of camshafts, wherein cylinder discrimination is performed during the output of a signal for detecting the reference crank angle position from a crank angle sensor based on the combination of the numbers of signal output from each of the plurality of cam sensors, even when only a small number of units to be detected are formed to the signal plate.

However, according to the above-mentioned cylinder discrimination device, it is necessary to ensure the cylinder discrimination (detection of reference crank angle positions corresponding to cylinders) to be performed in case of failure of the crank angle sensor.

Prior art document US 6,016,789 teaches an apparatus for control of an internal combustion engine, especially for control of fuel injection and ignition. Said apparatus is used with an internal combustion engine, especially a V-motor with a camshaft for each cylinder bank. Said device includes a signal transmitter with a transmitter wheel having angle marks extending over 180° for each camshaft. The crankshaft of the internal combustion engine is also provided with a signal transmitter including a transmitter wheel having a plurality of angle marks and at least one reference mark. The angle marks of the crankshaft, as well as the angle marks of each of the camshafts, are spaced at even intervals. Thus, the signal output as can be taken from each of the camshafts is at even intervals in reference to the crank angle.

In particulate, the transmitter wheel of each camshaft generates a high signal over 180° of rotation of the camshaft followed by a low signal over 180° of the camshaft. Since the rotation speed of the camshaft is half of the rotation speed of the camshaft, the high signal of each of the camshafts is present over 360° angle of the crankshaft followed by a low signal of 360° crank angle. The transmitter wheels of the camshafts are shifted to each other with respect to the crank angle, such that a specific combination of high level and low level condition of the camshaft is generated. According to said specific combination of the high level and low level signals and a further reference signal generated by the reference mark on the crankshaft, a specific cylinder can be identified.

In case of failure of the crankshaft transmitter, four well defined synchronization points can be produced by analysis of a positive or negative side of the pulsed camshaft transmitter signals in consideration of the high and low level signal. Said reference to the positive or negative side of the pulse signal allows identification of a specific cylinder without a crank angle signal.

It is an objective of the present invention to provide a cylinder discrimination device of an engine and a cylinder discrimination method of an engine as indicated above, wherein identification of the respective cylinders can be carried out in a simple manner.

According to the apparatus aspect of the present invention, said objective is solved by a cylinder discrimination device of an engine according to claim 1.

Preferred embodiments are laid down in the dependent claims.

Moreover according to the method aspect of the present invention, said objective is also solved by a cylinder discrimination method of an engine according to claim 12.

Preferred embodiments are laid down in the dependent claims.

According to this constitution, cylinder discrimination can be performed based only on the cylinder discrimination signals from the cam sensors.

Here, the specific cylinder may be discriminated based on the output characteristics of cylinder discrimination signals from another cam sensor during the period of time from the previous output until the current output of cylinder discrimination signals from the respective cam sensors.

According to this constitution, the output characteristics of the cylinder discrimination signals of the plurality of cam sensors can be set so as to be different, for a predetermined time, from the output characteristics of the cylinder discrimination signals from the another cam sensor during the period of time from the previous output until the current output of cylinder discrimination signals from the respective cam sensors. Thereby, the specific cylinder can be discriminated from the other cylinders.

In the above case, the number of output of cylinder discrimination signals from the another cam sensor may be counted during the period of time from the previous output until the current output of cylinder discrimination signals from the respective cam sensors, so that the specific cylinder can be discriminated depending on a difference in the number of signal output.

According to this constitution, by setting the number of output of cylinder discrimination signals output from the another cam sensor during the output interval of cylinder discrimination signals from the respective cam sensors so as to be different for a predetermined output interval, from the other output intervals, the specific cylinder can be discriminated from the other cylinders depending on the difference in the number of signal output.

Moreover, the cycle of input interval of the cylinder discrimination signals may be measured while cylinder discrimination signals output from the respective cam sensor are sequentially input, so that, based on a ratio of the most newly measured cycle and the previously measured cycle, and the discrimination of the cam sensor from which the newest cylinder discrimination signal has been output, the specific cylinder can be discriminated.

According to this constitution, the characteristics of the ratio between the newest value and the previous value of the crank angle interval for every cylinder discrimination signal sequentially output from the plurality of cam sensors can be set so that those of when the cylinder discrimination signals are output from the specific cylinder differ from those of when the cylinder discrimination signals are output from the other cylinders. Thereby, the specific cylinder can be discriminated from the other cylinders based on the ratio between the newest cycle and the previous cycle of cylinder discrimination signal input interval, and the discrimination of the cam sensor.

In the above case, the specific cylinder may also be discriminated when a value obtained by dividing the most newly measured cycle by the previously measured cycle exceeds a threshold value.

According to this constitution, if the newest value/previous value of crank angle interval for every cylinder discrimination signal of cam sensors is set to be greater during the cylinder discrimination signal output corresponding to the specific cylinder than during cylinder discrimination signal output corresponding to other cylinders, the (most newly measured cycle)/(previously measured cycle) value exceeds the threshold value only when the cylinder discrimination signal output corresponding to the specific cylinder. Thus, the specific cylinder can be discriminated from the other cylinders.

Furthermore, the cylinders other than the specific cylinder may be discriminated depending on the number of output of cylinder discrimination signals from a cam sensor corresponding to a cylinder to be discriminated, immediately after the specific cylinder has been discriminated.

According to this constitution, by setting the number of output of cylinder discrimination signals output from a predetermined cam sensor after the output of the cylinder discrimination signal that determines the specific cylinder so as to correspond to each of the cylinders other than the specific cylinder, the cylinders other than the specific cylinder can each be discriminated based on the number of signal output.

Even further, the cylinders other than the specific cylinder may also be discriminated depending on the total number of output of cylinder discrimination signals from the respective cam sensors, immediately after the specific cylinder has been discriminated.

According to this constitution, by setting the total number of output of the cylinder discrimination signals output from all the cam sensors after the cylinder discrimination signal for determining the specific cylinder has been output to correspond to each cylinder other than the specific cylinder, the cylinders other than the specific cylinder can be discriminated based on the total number of output.

Moreover, the constitution may be such that there is provided a crank angle sensor that outputs, in synchronism with the rotation of a crankshaft, a crank angle signal capable of detecting a reference crank angle position for every stroke phase difference between the cylinders, and during a regular condition, cylinder discrimination is performed based both on a reference crank angle position detected based on the crank angle signal from the crank angle sensor and cylinder discrimination signals from the cam sensors, while performing abnormality diagnosis of the crank angle sensor, and cylinder discrimination is performed based only on the cylinder discrimination signals output from the plurality of cam sensors when the crank angle sensor is diagnosed to be abnormal.

According to this constitution, when the crank angle sensor is working normally, the cylinder corresponding to the reference crank angle position can be discriminated to carry out highly accurate engine control (ignition timing control, fuel injection control and so on), while detecting the reference crank angle position with high accuracy based on the crank angle signal output in synchronism with the rotation of the crankshaft. Moreover, the cylinder discrimination can be performed even when the crank angle sensor is abnormal, thus ensuring the necessary engine control.

Further, the constitution may be such that, in addition to the crank angle sensor, there is provided an intake valve timing control device that varies the intake valve timing by changing the rotation phase of an intake-side camshaft with respect to the crankshaft, and when the crank angle sensor is diagnosed to be abnormal, the rotation phase of the intake-side camshaft with respect to the crankshaft is controlled to the most delayed rotation phase.

According to this constitution, when the crank angle sensor is abnormal, the rotation phase of the intake-side camshaft with respect to the crankshaft is controlled to the most delayed rotation phase, to thereby prevent the problems caused when the intake valve timing is controlled toward the advanced angle, such as, the occurrence of knocking during idling state. Moreover, since the rotation phase of the intake-side camshaft with respect to the crankshaft is fixed to a known phase, the reference crank angle position can be detected with high accuracy, enabling to improve the accuracy of a fail-safe control.

Moreover, the constitution may be such that, in addition to the crank angle sensor, there is provided an exhaust valve timing control device that varies the exhaust valve timing by changing the rotation phase of an exhaust-side camshaft with respect to the crankshaft, and when the crank angle sensor is diagnosed to be abnormal, the rotation phase of the exhaust-side camshaft with respect to the crankshaft is controlled to the most advanced rotation phase.

According to this constitution, since the rotation phase of the exhaust-side camshaft with respect to the crankshaft is controlled to the most advanced rotation phase when the crank angle sensor is abnormal, the problems caused by the exhaust valve timing being controlled toward the delayed angle, such as, knocking caused during idling condition, can be prevented. Moreover, since the rotation phase of the exhaust-side camshaft with respect to the crankshaft is fixed to a known phase, the reference crank angle position can be detected with high accuracy, enabling to improve the accuracy of the failsafe control.

Even further, the cam sensors can each be mounted respectively to each bank in a V-type engine, or they can each be mounted respectively to each camshaft in an engine equipped with an intake-side camshaft and an exhaust-side camshaft.

According to these constitutions, the cylinder discrimination is performed based on the combination of the number of cylinder discrimination signals being output from a cam sensor mounted to one camshaft between reference crank angle positions and the number of cylinder discrimination signals being output from another cam sensor mounted to the other camshaft between reference crank angle positions. In this way, since two cam sensors are mounted to different camshafts, the length size of the camshaft can be designed smaller compared to when two cam sensors are mounted to one camshaft.

Hereinafter, the present invention is illustrated and explained by means of preferred embodiments in conjunction with the accompanying drawings. In the drawings, wherein:
FIG. 1 is a diagram showing a system structure of a V-type 6 cylinder engine according to a first embodiment;
FIG. 2 is a time chart showing output characteristics of a detection signal in the V-type 6 cylinder engine;
FIG. 3 shows a cylinder discrimination pattern according to the output characteristics of FIG. 2;
FIG. 4 is a flowchart showing counting process of cylinder discrimination signal Phase1 between reference crank angle positions according to the above-mentioned embodiment;
FIG. 5 is a flowchart showing a counting process of cylinder discrimination signal Phase2 between reference crank angle positions according to the above-mentioned embodiment;
FIG. 6 is a flowchart showing cylinder discrimination process based on the count values of cylinder discrimination signals Phase1 and Phase2 according to the above-mentioned embodiment;
FIG. 7 is a flowchart showing fault diagnosis of a crank angle sensor to the starting of backup control;
FIG. 8 is a time chart showing the details of the backup control according to the above-mentioned embodiment;
FIG. 9 shows a cylinder discrimination pattern during backup control of the above-mentioned embodiment;
FIG. 10 is a flowchart showing counting process by interruption of one cylinder discrimination signal Phase1 during the backup control;
FIG. 11 is a flowchart showing counting process by interruption of another cylinder discrimination signal Phase2 during the backup control;
FIG. 12 is a time chart showing the details of backup control according to a second embodiment ;
FIG. 13 is a diagram showing a cylinder discrimination pattern during backup control of the second embodiment;
FIG. 14 is a flowchart showing the former steps of counting process by interruption of the cylinder discrimination signal during the backup control;
FIG. 15 is a flowchart showing the latter half of the counting process by interruption of the cylinder discrimination signal during the backup control; and
FIG. 16 is a diagram showing a system structure of an in-line 6-cylinder engine according to a third embodiment

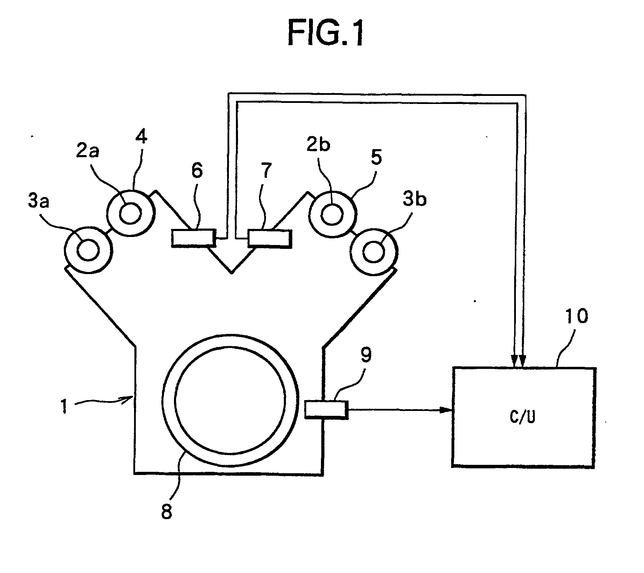

An engine shown in FIG. 1 is a 6-cylinder V-type engine 1, and each bank is equipped with intake-side camshafts 2a and 2b, and exhaust-side camshafts 3a and 3b.

Signal plates 4 and 5 are axially supported, respectively, by each of the intake-side camshafts 2a and 2b equipped to each bank, and magnet-type first cam sensor 6 and second cam sensor 7 are provided for detecting the protruded portion (not shown) formed to each of the signal plates 4 and 5 to output cylinder discrimination signals Phase1 and Phase2.

The first and second cam sensors 6 and 7 may be provided to each of the exhaust-side camshafts 3a and 3b of each bank, or the first and second cam sensors 6 and 7 may be provided to the intake-side camshaft 2a and the exhaust-side camshaft 3a at the one bank.

Furthermore, the engine is equipped with a magnet-type crank angle sensor 9 that outputs position signals POS for every unit angle by detecting the protruded portion (not shown) formed to a signal plate 8 mounted to a crank pulley.

Detection signals from the first cam sensor 6, the second cam sensor 7 and the crank angle sensor 9 are input to a control unit 10, and the control unit 10 having cylinder discrimination function performs cylinder discrimination based on the detection signals, and controls the fuel injection or ignition in the engine based on the result of the cylinder discrimination. Moreover, the control unit 10 is equipped with an intake valve timing control device and an exhaust valve timing control device that vary the valve timing while maintaining a fixed operation angle by changing the rotation phase of the intake-side camshaft or the exhaust-side camshaft with respect to a crankshaft, and detects the rotation phase of the intake-side camshaft based on the detection signals to feedback control the rotation phase. Further, the rotation phase of the exhaust-side camshaft is detected based on a detection signal output by another sensor not shown in the figure.

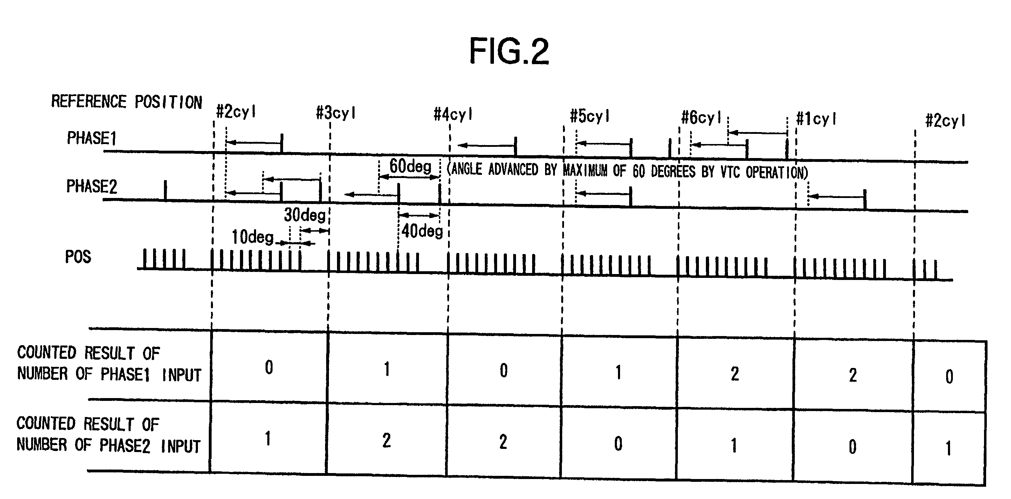

FIG. 2 shows output characteristics of the first cam sensor 6, the second cam sensor 7 and the crank angle sensor 9 in the above-mentioned 6-cylinder V-type engine. The position signal POS is constructed to be dropped out at every 120°CA equivalent to a stroke phase difference between cylinders. By detecting a drop out position, a reference crank angle position is detected.

On the other hand, the cylinder discrimination signal Phase1 is output for the following number of times: 0 times between reference crank angle positions #1 and #2; 1 time between reference crank angle positions #2 and #3; 0 times between reference crank angle positions #3 and #4; 1 time between reference crank angle positions #4 an #5; 2 times between reference crank angle positions #5 and #6; and 2 times between reference crank angle positions #6 and #1.

Moreover, the cylinder discrimination signal Phase2 is output for the following number of times: 1 time between reference crank angle positions #1 and #2; 2 times between reference crank angle positions #2 and #3; 2 times between reference crank angle positions #3 and #4; 0 times between reference crank angle positions #4 and #5; 1 time between reference crank angle positions #5 and #6; and 0 times between crank angle positions #6 and #1.

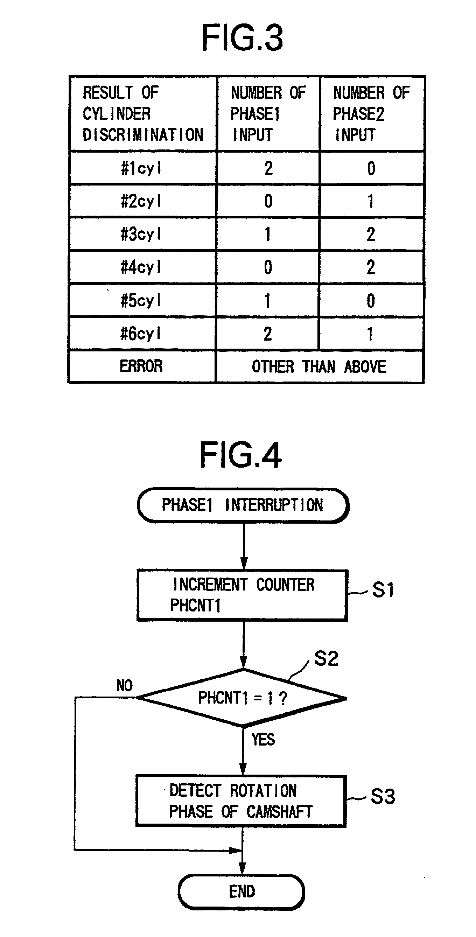

Therefore, the combinations of the output number of cylinder discrimination signals Phase1 and Phase2 constitute 6 patterns as shown in FIG. 3, and by determining which of the combinations corresponds to, the six cylinders can each be discriminated.

Next, a cylinder discrimination control performed based on the combination of the number of output of cylinder discrimination signals Phase1 and Phase2 between the reference crank angle positions is explained in detail with reference to flowcharts.

A control of flowchart of FIG. 4 is interruptingly executed whenever the cylinder discrimination signal Phase1 is output. In step S1, a counter PHCNT1 for counting the number of output of cylinder discrimination signals Phase1 is incremented.

In next step S2, it is judged whether or not the signal is a leading cylinder discrimination signal Phase1 output after the reference crank angle position, by judging whether or not the counter PHCNT1 is 1.

When the counter PHCNT1 is 1, the control advances to step S3 where based on the angle from the directly previous reference crank angle position to the leading cylinder discrimination signal Phase1, the rotation phase of the intake-side camshaft (intake valve timing) is detected.

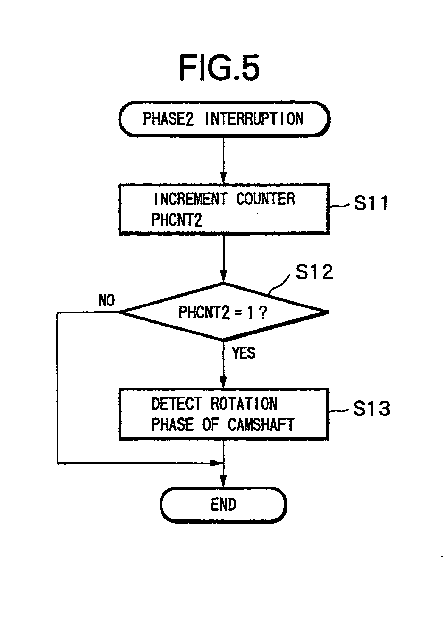

A control of flowchart of FIG. 5 is interruptingly executed whenever the cylinder discrimination signal Phase2 is output. Similar to FIG. 4, in step S11, a counter PHCNT2 for counting the number of output of cylinder discrimination signals Phase2 is incremented (counting means), then in next step S12, it is judged whether or not the counter PHCNT2 is 1. When the counter PHCNT2 is 1, the procedure advances to step S13 where based on the angle from the directly previous reference crank angle position to a leading cylinder discrimination signal Phase2, the rotation phase of the intake-side camshaft (intake valve timing) is detected.

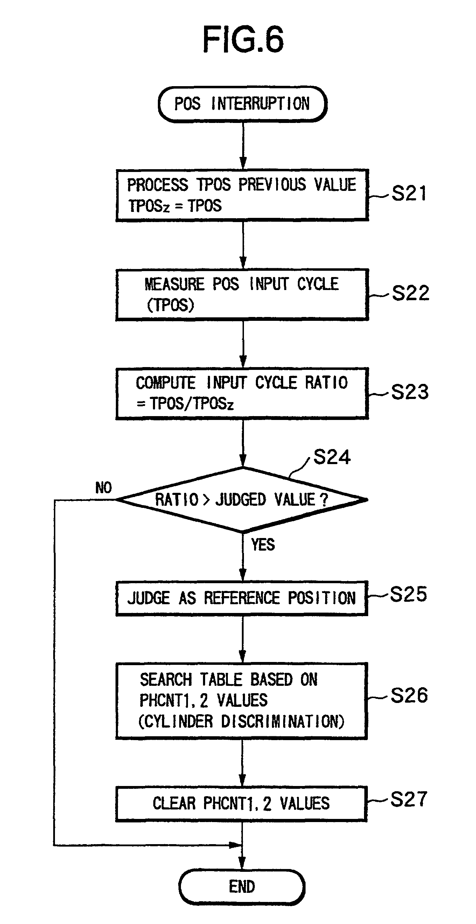

A control of flowchart of FIG. 6 is interruptingly executed whenever the position signal POS is output. In step S21, an output cycle TPOS of the position signal POS is set to the previous value TPOSz, and in next step S22, the newest cycle TPOS is obtained.

In step S23, a cycle ratio = TPOS/TPOSz is computed, and in step S24, it is judged whether or not the cycle ratio exceeds a judgment level, so as to discriminate whether or not it is the drop out position.

If the cycle ratio is equal to or below the judgment level, the preset routine is terminated. However, if the cycle ratio is judged to exceed the judgment level, the procedure advances to step S25 where the judgment of the reference crank angle position is performed.

In step S26, based on the counters PHCNT1 and PHCNT2 counting the number of output of the cylinder discrimination signals Phase1 and Phase2, by referring to a table as shown in FIG. 3, cylinder discrimination (discrimination of the cylinder corresponding to the current reference crank angle position) is performed.

In step S27, the counters PHCNT1 and PHCT2 are cleared so that the number of output of cylinder discrimination signals Phase1 and Phase2 between the next reference crank angle positions can be counted.

Next, a backup control according to the present teaching when the crank angle sensor is malfunctioning is explained.

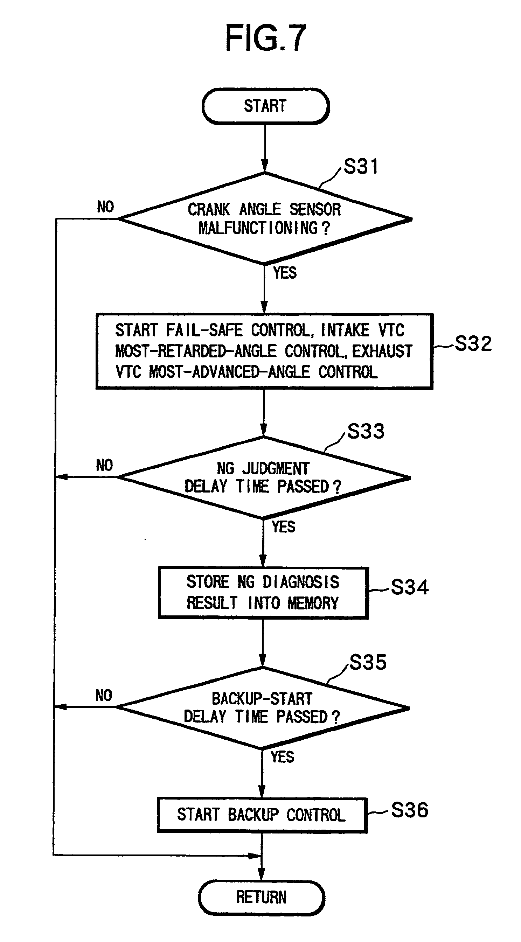

FIG. 7 is a flowchart showing a routine from fault diagnosis of the crank angle sensor to the starting of the backup control during failure.

In step S31, it is judged whether or not the crank angle sensor 9 is malfunctioning (disconnection), based on whether or not a state has continued for a predetermined time where the cylinder discrimination signals Phase1 and Phase2 are input but the position signal POS is not input.

When it is judged that the above state has continued for the predetermined time, it is diagnosed in step S32 that the crank angle sensor is malfunctioning, and a fail-safe control such as fuel cut and ignition cessation is started. At the same time, a control is started such that, by the intake/exhaust valve timing control device, the intake-side camshafts 2a and 2b are rotated relatively to a crank angle position that is the most delayed angle position with respect to the crankshaft by the intake/exhaust valve timing control device, and the exhaust-side camshafts 3a and 3b are rotated relatively to a crank angle position that is the most advanced angle position with respect to the crankshaft.

After the fault diagnosis, the elapse of a predetermined NG judgment delay time is further waited for in step S33, and in step 34, an NG diagnosis result is stored. Specifically, for example, a mill lamp is turned on.

In step S35, the elapse of a predetermined backup start delay time is further waited for before starting the backup control according to the present teaching, and in step S36, the backup control is started. That is, problems such as knocking during idling state may occur if the backup control is started while the intake-side camshaft is advanced or the exhaust-side camshaft is delayed, so the backup control is started after the intake/exhaust valve timing control has completely ended.

The backup control will now be explained in detail.

The output characteristics of the cylinder discrimination signals Phase1 and Phase2 are set as follows: during the longest interval between the cylinder discrimination signal Phase1 between reference crank angle positions #2 and #3 and the cylinder discrimination signal Phase1 output between reference crank angle positions #4 and #5, output from the first cam sensor 6, three or more cylinder discrimination signals Phase2 are output from the second cam sensor 7 (the number of output being either 3 or 4 due to a transient phase deviation during the rotation phase control between the camshafts), and during the output interval of other cylinder discrimination signals Phase1, less than three cylinder discrimination signals Phase2 are set to be output. Similarly, during the longest interval between the cylinder discrimination signal Phase2 between reference crank angle positions #5 and #6 and the cylinder discrimination signal Phase2 output between reference crank angle positions #1 and #2, output from the second cam sensor 7, three or more cylinder discrimination signals Phase1 are output from the first cam sensor 6, and during the output interval of other cylinder discrimination signals Phase2, less than three cylinder discrimination signals Phase1 are set to be output (refer to FIG. 2).

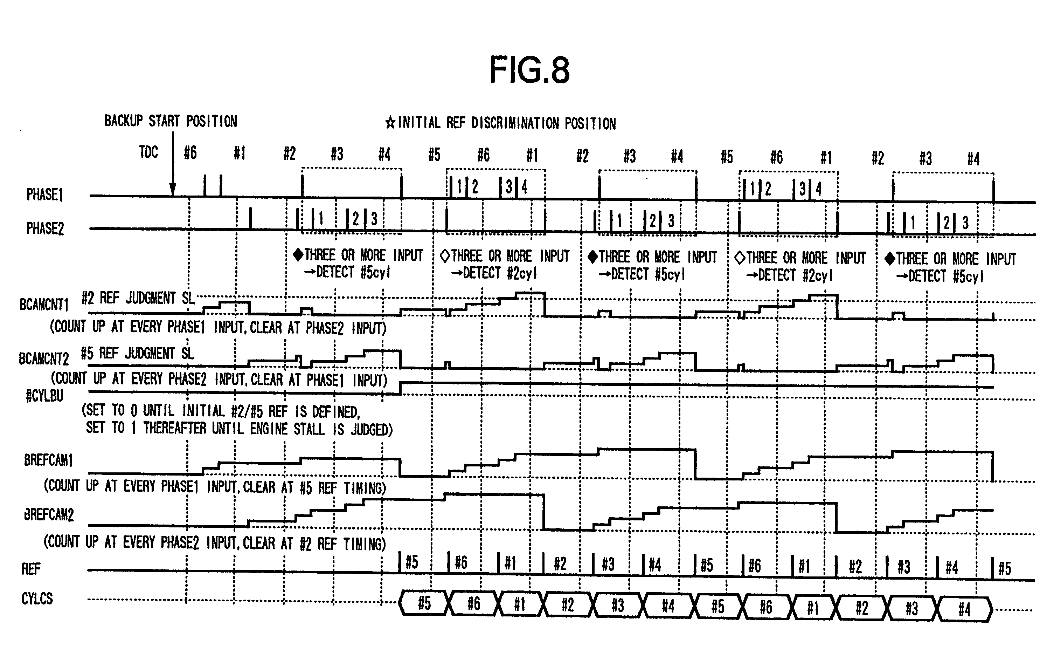

Based on the above characteristics, the backup control is carried out as shown in the time chart of FIG. 8.

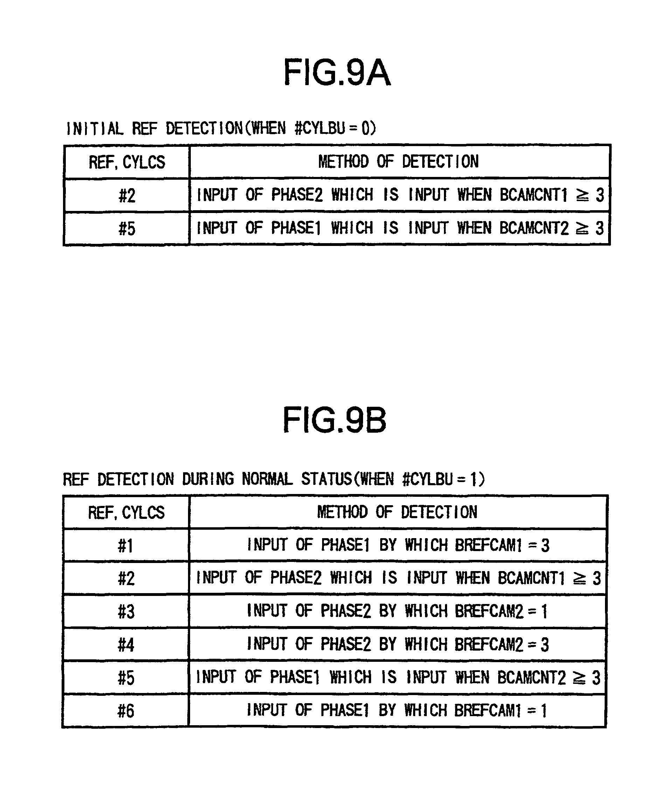

There is provided a counter BCAMCNT1 that is counted up for every output of the cylinder discrimination signal Phase1 output from the first cam sensor 6 and is cleared by the output of the cylinder discrimination signal Phase2 from the second cam sensor 7, and a counter BCAMCNT2 that is counted up for every output of the cylinder discrimination signal Phase2 output from the second cam sensor 7 and is cleared by the output of the cylinder discrimination signal Phase1 from the first cam sensor 6. In other words, the counter BCAMCNT1 has a function for counting the number of output of the cylinder discrimination signals Phase1 during the interval of output of cylinder discrimination signals Phase2, and the counter BCAMCNT2 has a function for counting the number of output of the cylinder discrimination signals Phase2 during the interval of output of cylinder discrimination signals Phase1. When the counted value of counter BCAMCNT2 equals or exceeds 3, the terminating time of that output interval, in other words, the time when the cylinder discrimination signal Phase1 output between reference crank angle positions #4 and #5 is output is detected as the reference crank angle position of cylinder #5. Similarly, when the counted value of counter BCAMCNT1 equals or exceeds 3, the terminating time of that output interval, in other words, the time when the cylinder discrimination signal Phase2 output between reference crank angle positions #1 and #2 is output is detected as the reference crank angle position of cylinder #2 (refer to FIG. 9(A)).

Further, after discriminating either one of the above-mentioned two specific cylinders (cylinder #5 and cylinder #2), the cylinders other than these specific cylinders are discriminated as follows. That is, there is provided a counter BREFCAM1 that is counted up for every output of the cylinder discrimination signal Phase1 and is cleared at the timing when cylinder #5 is detected, and a counter BREFCAM2 that is counted up for every output of the cylinder discrimination signal Phase2 and is cleared at the timing when cylinder #2 is detected, and based on the counted value of either the counter BREFCAM1 or counter BREFCAM2, cylinder discrimination is performed. Specifically, cylinder #6 is discriminated when the counted value of counter BREFCAM1 becomes 1 after detecting cylinder #5, and cylinder #1 is discriminated when the counted value reaches 3. Further, cylinder #3 is discriminated when the counted value of counter BREFCAM2 becomes 1 after detecting cylinder #2, and cylinder #4 is discriminated when the value reaches 3 (refer to FIG. 9(B)).

Next, the above-mentioned backup control will be explained in detail with reference to a flowchart.

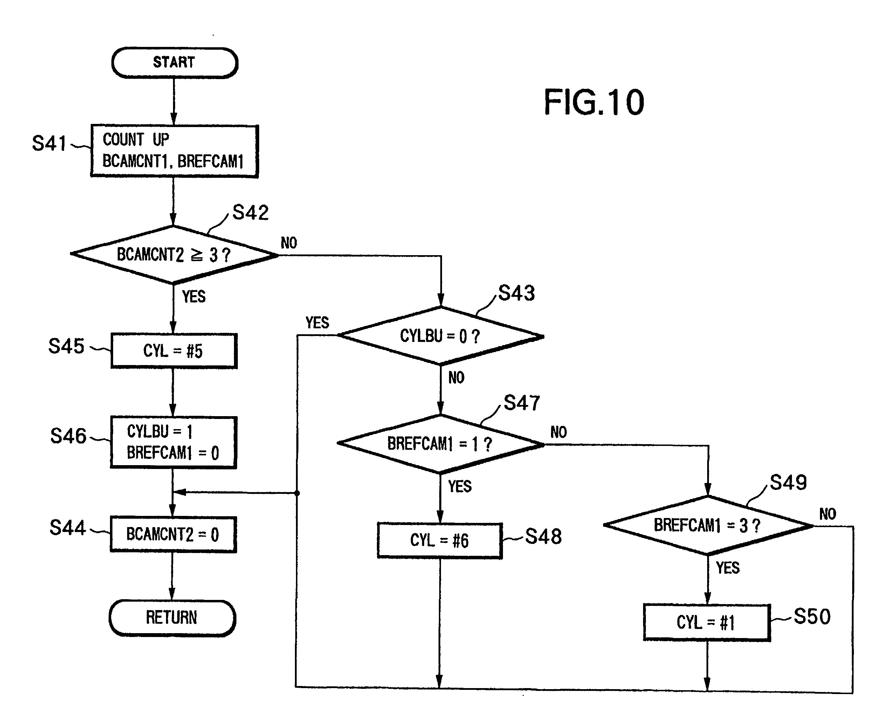

The flowchart of FIG. 10 is an interruption routine performed whenever the cylinder discrimination signal Phase1 is output after starting the backup control, wherein in step S41, counter BCAMCNT1 and counter BCAMCNT2 are each counted up.

In step S42, it judged whether or not the counted value of counter BCAMCNT2 is three or greater.

If the counted value is less than three, the procedure advances to step S43 where it is judged whether or not the initial judgment flag CYLBU is 0 (the initial value when starting the backup control is 0).

If the flag CYLBU is 0, it means that the initial discrimination of either one of the specific cylinders is not completed yet, and therefore the discrimination of other cylinders cannot be performed, so the procedure advances to step S44 where the counter BCAMCNT2 is reset and then the present flow is terminated.

When it is judged in step S42 that the counted value of the counter BCAMCNT2 is three or greater, the procedure advances to step S45 where the cylinder is discriminated as cylinder #5. The time of this discrimination is set as the reference crank angle position of cylinder #5, and based thereon the ignition timing control or the fuel injection control is performed (the same for all following steps).

Then, in step S46, the initial judgment flag CYLBU is set to 1 and the counter BREFCAM1 is reset, then, in step S44, the counter BCAMCNT2 is reset and the present flow is terminated.

After the discrimination of cylinder #5 is performed as above (or the discrimination of cylinder #2 is performed in advance as explained in the following) and the initial judgment flag CYLBU is set to 1, the procedure advances to step S47 where it is judged whether or not the counted value of the counter BCAMCNT1 is 1. When the counted value is 1, discrimination is performed in step S48 that the cylinder is cylinder #6. Further, when the counted value of the counter BCAMCNT1 is not 1, it is judged in step S49 whether or not the counted value is 3, and when it is 3, discrimination is performed in step S50 that the cylinder is cylinder #1. After these cylinder discriminations, the procedure advances to step S44 before the present flow is terminated.

Further, when the counted value of the counter BCAMCNT1 is judged to be other than 1 or 3, the procedure advances to step S44 before the present flow is terminated.

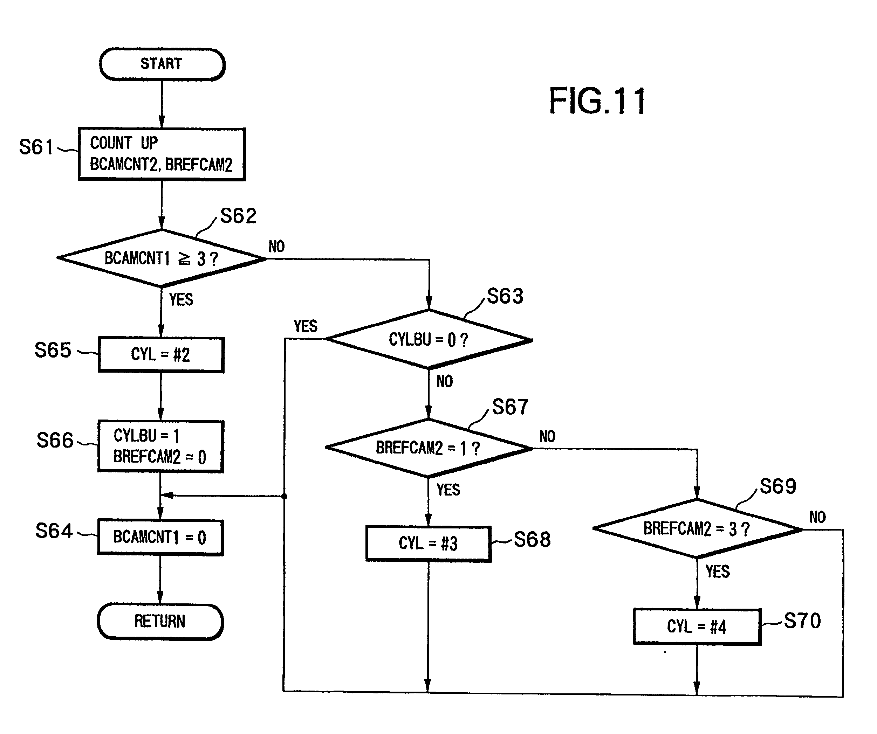

On the other hand, the flowchart of FIG. 11 is interruptingly executed whenever the cylinder discrimination signal Phase2 is output after the backup control has been started, wherein similar to FIG. 10, cylinder #2 is discriminated when the counted value of the counter BCAMCNT2 is 3 or more, and thereafter, when the counted value of the counter BCAMCNT2 is 1 (or 3), cylinder #3, cylinder #4 are sequentially discriminated.

Next, a second embodiment will be explained. An engine system to be applied, the control when the crank angle sensor is functioning normally, and the control from the fault diagnosis until the backup control is started, are the same as those of the first embodiment. In other words, FIGS. 1 through 7 are common to the first and second embodiments, and only the backup control of the second embodiment differs from that of the first embodiment.

The backup control according to the second embodiment will now be explained.

The output characteristics of the cylinder discrimination signals Phase1 and Phase2 output similarly as in the first embodiment are set as follows: the interval between the cylinder discrimination signal Phase2 output between reference crank angle positions #1 and #2 from the second cam sensor 7 and the cylinder discrimination signal Phase1 output between reference crank angle positions #2 and #3 from the first cam sensor 6 is set as the longest crank angle interval, and the interval until the cylinder discrimination signal Phase2 output from the second cam sensor 7 immediately thereafter is set as the shortest crank angle interval. Similarly, the interval between the cylinder discrimination signal Phase1 output between reference crank angle positions #4 and #5 from the first cam sensor 6 and the cylinder discrimination signal Phase2 output between reference crank angle positions #5 and #6 from the second cam sensor 7 is set as the longest crank angle interval, and the interval until the cylinder discrimination signal Phase1 output from the first cam sensor 6 immediately thereafter is set as the shortest crank angle interval (refer to FIG. 2).

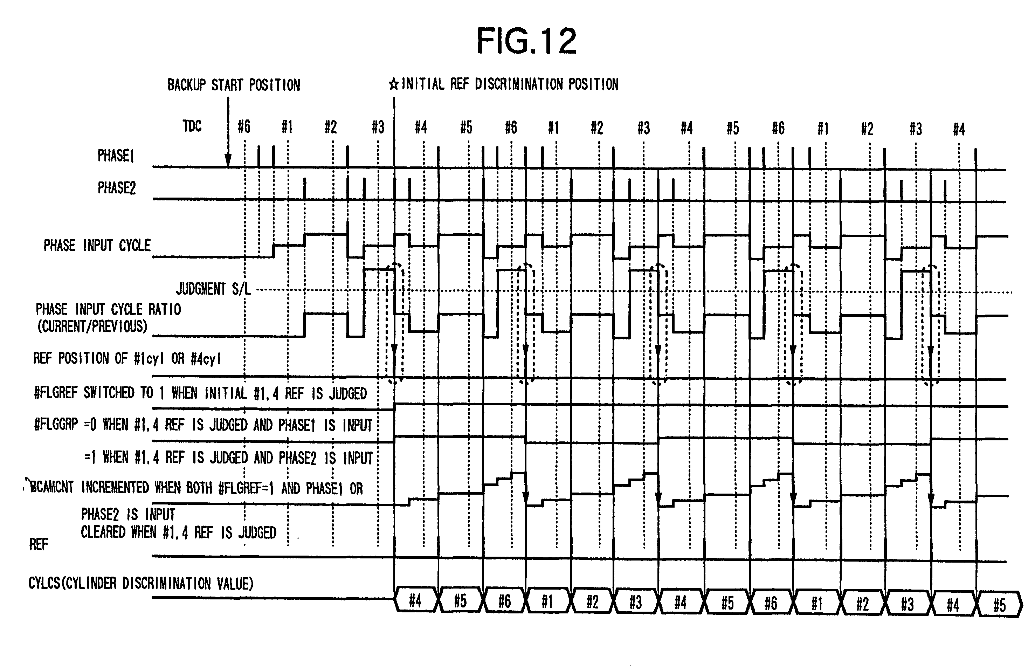

Based on these characteristics, the backup control is performed as shown in a time chart of FIG. 12.

In FIG. 12, the Phase input cycle is the cycle of signal input intervals measured whenever the cylinder discrimination signal Phase1 from the first cam sensor 6 or the cylinder discrimination signal Phase2 from the second cam sensor 7 is input.

The Phase input cycle ratio is a ratio between the most newly measured value and the previously measured value of the Phase input cycle (newest value/last value).

The point of time when the Phase input cycle ratio is judged to exceed the judgment slice level S/L (threshold value) (when the next cylinder discrimination signal Phase is input after exceeding the slice level) is set as a reference position REF of either cylinder #1 or cylinder #4 (specific cylinder).

The flag FLGREF is switched from 0 to 1 (the flag is reset to 0 before starting the backup control) when it is initially discriminated that the cylinder is #1 or #4.

The flag FLGGRP is switched to 0 when the cylinder is discriminated to be either specific cylinder #1 or specific cylinder #4, and at this time the cylinder discrimination signal Phase1 is being input. Similarly, when the cylinder discrimination signal Phase2 is being input when a specific cylinder is discriminated, the flag is switched to 1.

That is, it is initially discriminated that the cylinder is one of the either specific cylinders #1 or #4 when the flag FLGREF is switched to 1, and if the flag FLGGRP is 0 at this time, the initial specific cylinder is discriminated as cylinder #1, and if the flag FLGGRP is 1, the initial specific cylinder is discriminated as cylinder #4. Thereafter, whenever the value of the flag FLGGRP is switched, the specific cylinder is discriminated as either #1 or #4. In other words, the specific cylinder is discriminated based on the Phase input cycle ratio and the discrimination of the cam sensor from which the newest cylinder discrimination signal has been output.

Moreover, the counter BCAMCNT is incremented whenever the cylinder discrimination signal Phase1 or the cylinder discrimination signal Phase2 is input after the flag FLGREF has been switched to 1, and cleared each time the specific cylinder (#1 or #4) is discriminated.

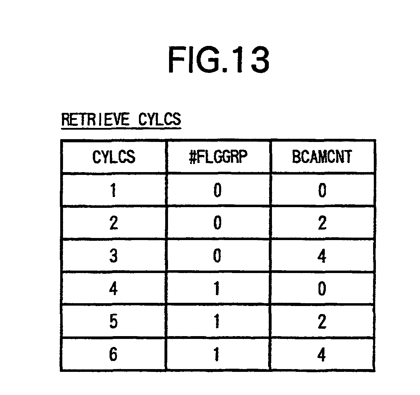

After discriminating the specific cylinder #1 or #4, based on the discriminated result and the counted value of the counter BCAMCNT, the cylinders other than the specific cylinders #1 and #4 (#2, #3, #5, #6) are discriminated. Specifically, after the flag FLGGRP becomes 0 and cylinder #1 is discriminated, cylinder #2 is discriminated when the counter BCAMCNT becomes 2, and cylinder #3 is discriminated when the counter BCAMCNT becomes 4. Next, after discriminating cylinder #4 when the flag FLGGRP is switched to 1, cylinder #5 is discriminated when the counter BCAMCNT becomes 2, and cylinder #6 is discriminated when the counter BCAMCNT becomes 4 (refer to FIG. 13).

Next, the above-mentioned backup control will be explained in detail with reference to the flowcharts.

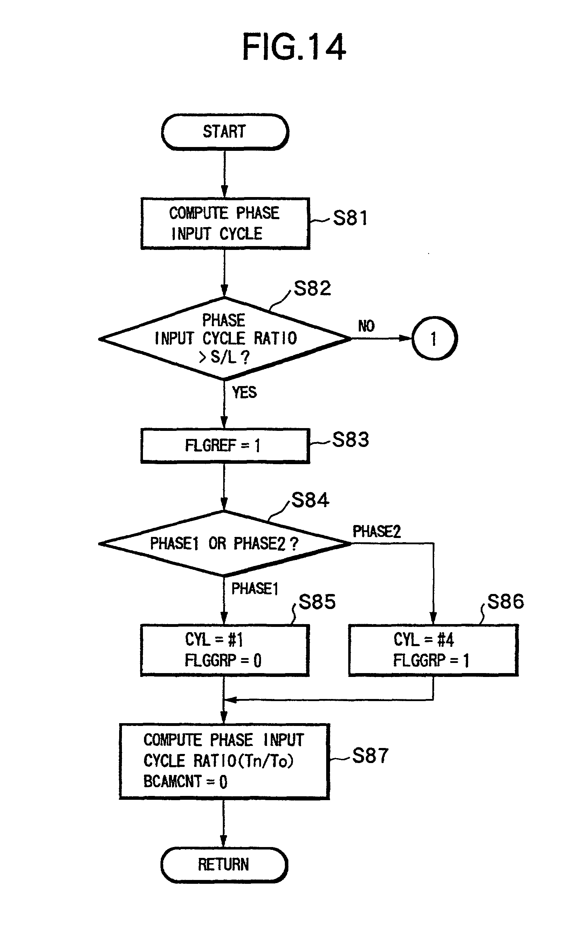

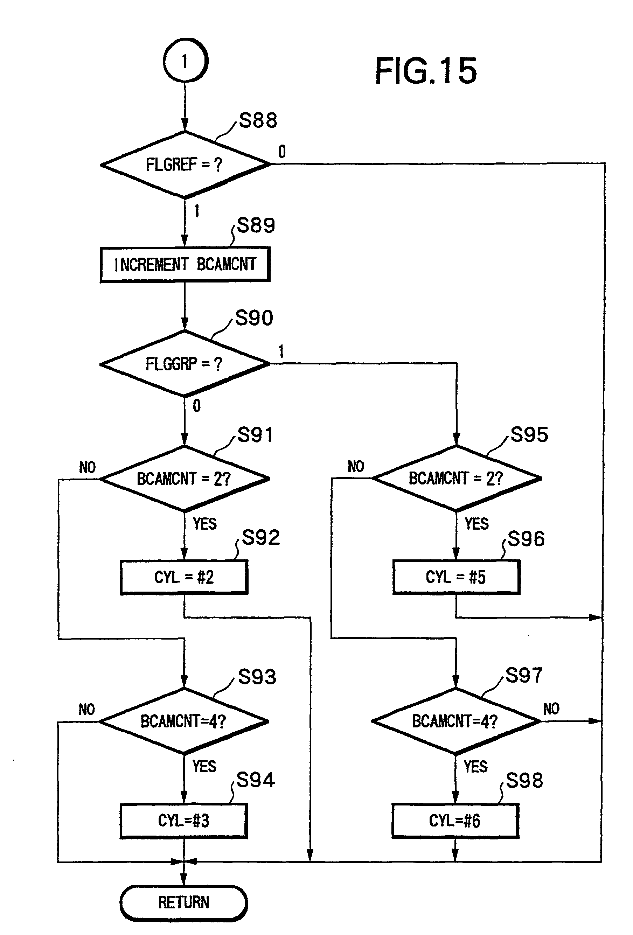

The flowcharts of FIG. 14 and FIG. 15 are interruptingly executed whenever the cylinder discrimination signal Phase1 or Phase2 is output after the backup control has been started. In step S81, the abovementioned Phase input cycle is computed.

In step S82, it is judged whether or not the Phase input cycle ratio currently stored (newest value/last value of Phase input cycle) exceeds a judgment slice level S/L.

When it is judged in step S82 to exceed the judgment slice level S/L, the procedure advances to step S83, and the flag FLGREF is set to 1.

In step S84, it is judged whether the currently input cylinder discrimination signal is Phase1 or Phase2.

If the signal is judged to be Phase1, the procedure advances to step S85 where the cylinder is discriminated as cylinder #1 (the time of discrimination is set as the reference position of cylinder #1, and the same for all following steps), and the flag FLGGRP is set to 0. If the signal is judged to be Phase2, the procedure advances to step S86 where the cylinder is discriminated as cylinder #4, and the flag FLGGRP is set to 1.

Next, in step S87, the Phase input cycle ratio (Tn/To) is computed based on the current Phase input cycle Tn and the previous Phase input cycle To computed in step S81, which is then stored for use in the following step S82, and at the same time, the counter BCAMCNT is cleared to 0.

On the other hand, when it is judged in step S82 that the Phase input cycle ratio does not exceed the judgment slice level, the procedure advances to step S88 where the value of flag FLGREF is discriminated. If the flag FLGREF is 0, in other words, when the initial specific cylinder has not yet been discriminated, the present flow is terminated and the input of a new cylinder discrimination signal is waited for.

When the flag FLGREF is 1, that is, after the initial specific cylinder has been discriminated, the procedure advances to step S89 where the counter BCAMCNT is incremented and then the procedure advances to step S90 where the value of the flag FLGGRP is discriminated.

When the flag FLGGRP is 0, in other words, when the currently discriminated cylinder is cylinder #1, it is judged in step S91 whether or not the counted value of the counter BCAMCNT is 2, and if the value is 2, the procedure advances to step S92 where the cylinder is discriminated as cylinder #2. Further, if the counted value of the counter BCAMCNT is not 2, the procedure advances to step S93 where it is judged whether or not the counted value is 4. When the value is 4, the procedure advances to step S94 where the cylinder is discriminated as cylinder #3. After the above-mentioned cylinder discrimination, the present flow is terminated. Moreover, if the counted value of counter BCAMCNT is other than 2 or 4, the present flow is terminated while maintaining the current cylinder discrimination result.

Moreover, when the flag FLGGRP is 1 in step S90, in other words, when the currently discriminated cylinder is cylinder #4, cylinder discrimination can similarly be performed. That is, during steps S95 through S98, while incrementing the counter BCAMCNT, the cylinder is discriminated as cylinder #5 or cylinder #6 when the counted value is 2 or 4, respectively, and if the value is other than those, the present flow is terminated while maintaining the current cylinder discrimination result.

The abovementioned first embodiment and the second embodiment have been explained as applied to a V-type engine, but the present teaching can also be applied to an in-line engine.

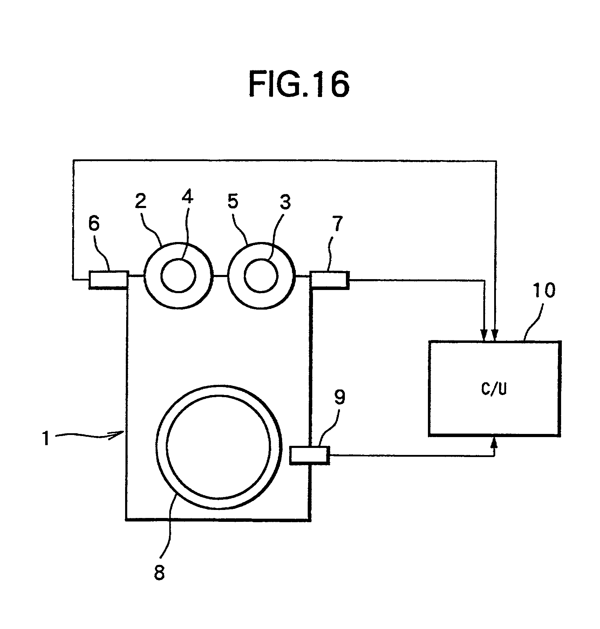

FIG. 16 shows a third embodiment where the first cam sensor 6 and the second cam sensor 7 having the same functions as those explained in the preceding embodiments are mounted to the intake-side camshaft 2 and the exhaust-side camshaft 3 of an in-line 6-cylinder engine 1. The cylinder discrimination control is performed similarly as explained in the first and second embodiments.

According to the third embodiment, since two cam sensors are mounted to different camshafts, the size of the camshaft will not be increased in the length direction, and during malfunction of the crank angle sensor, the fail-safe control can be performed by discriminating cylinders based only on the signals output from said two cam sensors.

## Claims

1. A cylinder discrimination device of an engine comprising:
a plurality of cam sensors (6,7) for outputting cylinder discrimination signals (Phase1, Phase 2);
a cylinder discrimination unit for discriminating cylinders based on said cylinder discrimination signals (Phase1, Phase 2) output from said plurality of cam sensors (6,7);
**characterized in that**
said plurality of cam sensors (6,7) are provided for outputting
cylinder discrimination signals (Phase1, Phase 2) at every uneven crank angle interval;
said cylinder discrimination unit comprises a specific cylinder discrimination unit for discriminating a specific cylinder based on said cylinder discrimination signals (Phase1, Phase 2) output from said plurality of cam sensors (6,7); and
a nonspecific cylinder discrimination unit for discriminating cylinders other than said specific cylinder based on the discriminated result of said specific cylinder by said specific cylinder discrimination unit and said cylinder discrimination signals (Phase1, Phase 2) from said cam sensors (6,7),
wherein said specific cylinder discrimination unit discriminates a specific cylinder based on output characteristics of cylinder discrimination signals (Phase1, Phase 2) output from another cam sensor during a period of time from a previous output until a current output of cylinder discrimination signals (Phase1, Phase 2) from said respective cam sensors.

2. A cylinder discrimination device of an engine according to claim1; **characterized in that** said specific cylinder discrimination unit counts the number of output of cylinder discrimination signals from said another cam sensor during the period of time from the previous output and the current output of cylinder discrimination signals from said respective cam sensors, and discriminates the specific cylinder based on a difference in the number of said output.

3. A cylinder discrimination device of an engine according to claim 1 or 2, **characterized in that** said specific cylinder discrimination unit measures the cycle of input of said cylinder discrimination signals while cylinder discrimination signals output from the respective cam sensors are sequentially input thereto, to discriminate the specific cylinder, based on a ratio of the most newly measured cycle and the previously measured cycle, and the discrimination of the cam sensor from which the newest cylinder discrimination signal has been output.

4. A cylinder discrimination device of an engine according to claim 3, **characterized in that** said specific cylinder discrimination unit discriminates the specific cylinder when a value obtained by dividing said most newly measured cycle by said previously measured cycle exceeds a threshold value.

5. A cylinder discrimination device of an engine according to at least one of the claims 1 to 4, **characterized in that** said nonspecific cylinder discrimination unit discriminates the cylinders other than the specific cylinder based on the number of output of cylinder discrimination signals from a cam sensor corresponding to the cylinder to be discriminated, immediately after the discrimination of the specific cylinder.

6. A cylinder discrimination device of an engine according to at least one of the claims 1 to 4, **characterized in that** said nonspecific cylinder discrimination unit discriminates the cylinders other than the specific cylinder based on the total number of output of said cylinder discrimination signals from the respective cam sensors, immediately after the discrimination of the specific cylinder.

7. A cylinder discrimination device of an engine according to at least one of the claims 1 to 6, **characterized by**
a crank angle sensor for outputting a crank angle signal in synchronism with the rotation of a crankshaft, capable of detecting a reference crank angle position for every stroke phase difference between the cylinders;
a regular cylinder discrimination unit for performing cylinder discrimination based on said detected reference crank angle position and the cylinder discrimination signals from said cam sensors;
a fault diagnosis unit for performing fault diagnosis of said crank angle sensor; and
a selecting unit for having said regular cylinder discrimination unit to perform cylinder discrimination when said crank angle sensor is diagnosed as normal by said fault diagnosis unit, and having said specific cylinder discrimination unit and said nonspecific cylinder discrimination unit to perform cylinder discrimination only when said crank angle sensor is diagnosed to be abnormal.

8. A cylinder discrimination device of an engine according to claim 7, **characterized by** an intake valve timing control device for varying an intake valve timing by changing a rotation phase of an intake-side camshaft with respect to the crankshaft; and
a most-delayed-angle control unit for controlling the rotation phase of said intake-side camshaft with respect to the crankshaft to the most delayed angle when said crank angle sensor is diagnosed to be abnormal by said fault diagnosis unit.

9. A cylinder discrimination device of an engine according to claim 7 or 8, **characterized by** an exhaust valve timing control device for varying an exhaust valve timing by changing a rotation phase of an exhaust-side camshaft with respect to the crankshaft; and a most-advanced-angle control unit for controlling the rotation phase of said exhaust-side camshaft with respect to the crankshaft to the most advanced angle when said crank angle sensor is diagnosed to be abnormal by said fault diagnosis unit.

10. A cylinder discrimination device of an engine according to at least one of the claims 1 to 9, **characterized in that** said cam sensors are mounted respectively to each bank in a V-type engine.

11. A cylinder discrimination device of an engine according to at least one of the claims 1 to 10, **characterized in that** said cam sensors are mounted correspondingly to each camshaft in an engine equipped with an intake-side camshaft and an exhaust-side camshaft.

12. A cylinder discrimination method of an engine comprising the steps of:
outputting cylinder discrimination signals (Phase1, Phase 2 from a plurality of cam sensors (6,7);
discriminating cylinders based on the cylinder discrimination signals output from said plurality of cam sensors (6,7);
**characterized by**
outputting cylinder discrimination signals (Phase1, Phase 2) at every uneven crank angle interval from the plurality of cam sensors (6,7);
discriminating a specific cylinder based on the cylinder discrimination signals output from said plurality of cam sensors (6,7); and
discriminating cylinders other than said specific cylinder based on the discriminated result of said specific cylinder and said cylinder discrimination signals (Phase1, Phase 2) from said cam sensors (6,7), wherein the specific cylinder is discriminated based on output characteristics of cylinder discrimination signals (Phase1, Phase 2) output from another cam sensor during a period of time from a previous output and a current output of cylinder discrimination signals (Phase1, Phase 2) from said respective cam sensors (6,7).

13. A cylinder discrimination method of an engine according to claim 12, **characterized in that** the number of output of cylinder discrimination signals from said another cam sensor is counted during the period of time from the previous output and the current output of cylinder discrimination signals from said respective cam sensors, and the specific cylinder is discriminated based on a difference in the number of said output.

14. A cylinder discrimination method of an engine according to claim 12 or 13, **characterized in that** the cycle of input of said cylinder discrimination signals is measured while cylinder discrimination signals output from the respective cam sensors are sequentially input, to discriminate the specific cylinder, based on a ratio of the most newly measured cycle and the previously measured cycle and the discrimination of the cam sensor from which the newest cylinder discrimination signal has been output.

15. A cylinder discrimination method of an engine according to claim 14, **characterized in that** the specific cylinder is discriminated when a value obtained by dividing said most newly measured cycle by said previously measured cycle exceeds a threshold value.

16. A cylinder discrimination method of an engine according to at least one of the claims 12 to 15, **characterized in that** the cylinders other than said specific cylinder are discriminated based on the number of output of cylinder discrimination signals from a cam sensor corresponding to the cylinder to be discriminated, immediately after the discrimination of said specific cylinder.

17. A cylinder discrimination method of an engine according to at least one of the claims 12 to 15, **characterized in that** the cylinders other than said specific cylinder are discriminated based on the total number of output of said cylinder discrimination Signals from the respective cam sensors, immediately after the discrimination of said specific cylinder.

18. A cylinder discrimination method of an engine according to at least one of the claims 12 to 17, **characterized by** the steps of:
outputting a crank angle signal from a crank angle sensor, in synchronism with the rotation of a crankshaft, capable of detecting a reference crank angle position for every stroke phase difference between the cylinders;
performing fault diagnosis of said crank angle sensor;
performing cylinder discrimination based on said detected reference crank angle position and cylinder discrimination signals from said cam sensor when said crank angle sensor is diagnosed as normal; and
performing cylinder discrimination based only on said cylinder discrimination signals output from said plurality of cam sensors only when said crank angle sensor is diagnosed to be abnormal.

19. A cylinder discrimination method of an engine according to claim 18, **characterized by** an intake valve timing control device for varying an intake valve timing by changing a rotation phase of an intake-side camshaft with respect to the crankshaft to control the rotation phase of said intake-side camshaft to the most delayed rotation phase angle when said crank angle sensor is diagnosed to be abnormal.

20. A cylinder discrimination method of an engine according to claim 18 or 19, **characterized by** an exhaust valve timing control device for varying an exhaust valve timing by changing a rotation phase of an exhaust-side camshaft with respect to the crankshaft to control the rotation phase of said exhaust-side camshaft to the most advance-angled rotation phase angle when said crank angle sensor is diagnosed to be abnormal.

21. A cylinder discrimination method of an engine according to at least one of the claims 12 to 20, **characterized in that** said cylinder discrimination signals are output from cam sensors mounted correspondingly to each bank in a V-type engine.

22. A cylinder discrimination method of an engine according to at least one of the claims 12 to 21, **characterized in that** said cylinder discrimination signals are output from cam sensors mounted correspondingly to an intake-side camshaft and an exhaust-side camshaft of said engine.

23. A cylinder discrimination method of an engine according to claim 13, wherein said cylinder discrimination signals are output from cam sensors mounted correspondingly to each bank in a V-type engine.

24. A cylinder discrimination method of an engine according to claim 13, wherein said cylinder discrimination signals are output from cam sensors mounted correspondingly to an intake-side camshaft and an exhaust-side camshaft of said engine.

## Patentansprüche

1. Zylinder- Unterscheidungsvorrichtung eines Motors, die aufweist:
eine Mehrzahl von Nockensensoren (6, 7) zum Ausgeben von Zylinder- Unterscheidungssignalen (Phase 1, Phase 2), einen Zylinder- Unterscheidungs-einheit von Zylindern auf der Grundlage der Unterscheidungssignale (Phase 1, Phase 2), ausgegeben von der Mehrzahl von Nockensensoren (6, 7);
**dadurch gekennzeichnet, dass**
die Mehrzahl der Nockensensoren (6, 7) vorgesehen sind für das Ausgeben von Zylinder- Unterscheidungssignalen (Phase 1, Phase 2) bei jedem ungeraden Kurbelwinkelintervall;
wobei die Zylinder- Unterscheidungseinheit eine spezifische Zylinder- Unterscheidungseinheit für das Unterscheiden eines speziellen Zylinders auf der Grundlage der Zylinder- Unterscheidungssignale (Phase 1, Phase 2) aufweist, ausgegeben von der Mehrzahl von Nockensensoren (6, 7); und
eine nicht- spezifische Zylinder- Unterscheidungseinheit für das Unterscheiden von anderen als dem spezifischen Zylinder, auf der Grundlage des unterschiedenen Ergebnisses des spezifischen Zylinders durch die spezifische Zylinder- Unterscheidungseinheit und der Unterscheidungssignale (Phase 1, Phase 2) von den Nockensensoren (6, 7), wobei die spezifische Unterscheidungseinheit einen spezifischen Zylinder auf der Grundlage von Zylinder- Ausgangsmerkmalen von Zylinder- Unterscheidungssignalen (Phase 1, Phase 2) unterscheidet, ausgegeben von einem weiteren Nockensensor während einer Zeitdauer von der vorhergehenden Ausgabe bis zur gegenwärtigen Ausgabe der Zylinder- Unterscheidungssignale (Phase 1, Phase 2) von den jeweiligen Nockensensoren.

2. Zylinder- Unterscheidungsvorrichtung eines Motors nach Anspruch 1,
**dadurch gekennzeichnet, dass** die spezifische Zylinder- Unterscheidungseinheit die Anzahl der Ausgabe von Zylinder- Unterscheidungssignaten von diesem weiteren Nockensensor während der Zeitdauer von der vorhergehenden Ausgabe und der gegenwärtigen Ausgabe von Zylinder- Unterscheidungssignaten von den jeweiligen Nockensensoren zählt, und die spezifischen Zylinder auf der Grundlage des Unterschiedes in der Anzahl dieser Ausgangssignale unterscheidet.

3. Zylinder- Unterscheidungsvorrichtung eines Motors nach Anspruch 1oder 2, **dadurch gekennzeichnet, dass** die spezifische Zylinder- Unterscheidungseinheit den Takt- Eingang von Zylinder- Unterscheidungssignalen misst, während Zylinder- Unterscheidungssignale, ausgegeben von den jeweiligen Nocken-sensoren, aufeinanderfolgend dazu eingegeben werden, um die spezifischen Zylinder auf der Grundlage eines Verhältnisses des zuletzt gemessenen Taktes und des vorher gemessenen Taktes zu unterscheiden, und der Unterscheidung des Nockensensors, von dem das jüngsten Zylinder- Unterscheidungssignal ausgegeben worden ist.

4. Zylinder- Unterscheidungsvorrichtung eines Motors nach Anspruch 3, **dadurch gekennzeichnet, dass** die spezifische Zylinder- Unterscheidungseinheit die spezifischen Zylinder unterscheidet, wenn ein Wert, erhalten durch Dividieren des am zuletzt gemessenen Taktes durch den vorher gemessenen Takt einen Grenzwert überschreitet.

5. Zylinder- Unterscheidungsvorrichtung eines Motors nach zumindest einem der Ansprüche 1 bis 4, **dadurch gekennzeichnet, dass** die nicht- spezifische Zylinder- Unterscheidungseinheit die anderen als den spezifischen Zylinder auf der Grundlage der Anzahl der Ausgaben der Zylinder- Unterscheidungssignale von einem Nockensensor unterscheidet, entsprechend dem Zylinder, der unterschieden werden soll, unmittelbar nach der Unterscheidung des spezifischen Zylinders.

6. Zylinder- Unterscheidungsvorrichtung eines Motors nach zumindest einem der Ansprüche 1 bis 4, **dadurch gekennzeichnet, dass** die nicht- spezifische Zylinder- Unterscheidungseinheit die Zylinder, die nicht der spezifische Zylinder sind, auf der Grundlage der Gesamtzahl der Ausgabe der Zylinder- Unterscheidungssignale von den jeweiligen Nockensensoren unterscheidet, unmittelbar nach der Unterscheidung des spezifischen Zylinders.

7. Zylinder- Unterscheidungsvorrichtung nach zumindest einem der Ansprüche 1 bis 6, **gekennzeichnet durch**
einen Kurbelwinkelsensor für das Ausgeben eines Kurbelwinkelsignals synchron mit der Drehung einer Kurbelwelle, der in der Lage ist, eine Referenz- Kurbel-winkelposition für jede Hub- Phasendifferenz zwischen den Zylindern auszugeben;
eine reguläre Zylinder- Unterscheidungseinheit für das Ausführen einer Zylinderunterscheidung auf der Grundlage der erfassten Referenz- Kurbel-winkelposition und der Zylinder- Unterscheidungssignale von den Nocken-sensoren;
einer Fehlerdiagnoseeinheit für das Ausführen einer Fehlerdiagnose des Kurbelwinkelsensors; und
eine Auswahleinheit, um diese reguläre Zylinder- Unterscheidungseinheit zu veranlassen, um die Zylinder- Unterscheidung auszuführen, wenn der Kurbelwinkelsensor **durch** die Fehlerdiagnoseeinheit als normal diagnostiziert wird, und um die spezifische Zylinder- Unterscheidungseinheit und die nicht- spezifische Zylinder- Unterscheidungseinheit zu veranlassen, um die Zylinder- Unterscheidung nur auszuführen, wenn der Kurbelwinkelsensor als abnormal diagnostiziert wird.

8. Zylinder- Unterscheidungsvonichtung eines Motors nach Anspruch 7, **gekennzeichnet durch** eine Einlassventilzeitpunkt- Steuervorrichtung für das Verändern eines Einlassventilzeitpunktes **durch** Verändern einer Drehphase einer einlassseitigen Nockenwelle in Bezug auf die Kurbelwelle; und
eine am meisten verzögerte Winkel- Steuerungseinheit für das Steuern der Drehphase der einglasseitigen Nockenwelle in Bezug auf die Kurbelwelle auf den am meisten verzögerten Winkel, wenn der Kurbelwinkelsensor **durch** die Fehlerdiagnose als abnormal diagnostiziert wird.

9. Zylinder- Unterscheidungsvorrichtung eines Motors nach Anspruch 7 oder 8, **gekennzeichnet durch** eine Auslassventilzeitpunkt- Steuervorrichtung zum Verändern eines Auslassventilzeitpunktes **durch** Verändern einer Drehphase einer auslassseitigen Nockenwelle in Bezug auf die Kurbelwelle; und eine am weitesten vorverschobene Winkel- Steuerungseinheit für das Steuern der Drehphase der auslassseitigen Nockenwelle in Bezug auf die Kurbelwelle auf dem am weitesten vorverstellten Winkel, wenn der Kurbelwinkelsensor **durch** die Fehlerdiagnose als abnormal diagnostiziert wird.

10. Zylinder- Unterscheidungsvorrichtung eines Motors nach zumindest einem der Ansprüche 1 bis 9, **dadurch gekennzeichnet, dass** die Nockensensoren jeweils an jeder Bank eines Motors vom V- Typ montiert sind.

11. Zylinder- Unterscheidungsvorrichtung eines Motors nach zumindest einem der Ansprüche 1 bis 10, **dadurch gekennzeichnet, dass** die Nockensensoren entsprechend jeder Nockenwelle in einem Motor montiert sind, der mit einer Nockenwelle auf der Einlassseite und mit einer Nockenwelle auf der Auslassseite ausgerüstet ist.

12. Zylinder- Unterscheidungsverfahren eines Motors, mit den Schritten von:
Ausgeben von Zylinder- Unterscheidungssignalen (Phase 1, Phase 2) von einer Mehrzahl von Nockensensoren (6, 7);
Unterscheiden von Zylindern auf der Grundlage der Zylinder- Unterscheidungssignale, ausgegeben von der Mehrzahl der Nockensensoren (6, 7);
**gekennzeichnet durch**
Ausgeben von Zylinder- Unterscheidungssignalen (Phase 1, Phase 2) bei jedem ungeraden Kurbelwinkelintervall von einer Mehrzahl von Nockensensoren (6, 7); Unterscheiden eines spezifischen Zylinders auf der Grundlage der Zylinder- Unterscheidungssignale, ausgegeben von einer Mehrzahl von Nockensensoren (6, 7); und
Unterscheiden der übrigen Zylinder, verschieden von dem spezifischen Zylinder auf der Grundlage des unterschiedenen Ergebnisses des spezifischen Zylinders und der Zylinder Unterscheidungssignale (Phase 1, Phase 2) von einer Mehrzahl von Nockensensoren (6, 7), wobei der spezifische Zylinder auf der Grundlage von Ausgabe- Merkmalen der Zylinder- Unterscheidungssignale (Phase 1, Phase 2), ausgegeben von einem weiteren Nockensensor während einer Zeitdauer von einer vorherigen Ausgabe und einer momentanen Ausgabe der Zylinder- Unterscheidungssignale (Phase 1, Phase 2) von den jeweiligen Nockensensoren (6, 7) unterschieden wird.

13. Zylinder- Unterscheidungsverfahren eines Motors nach Anspruch 12, **dadurch gekennzeichnet, dass** die Anzahl von Ausgaben von Zylinder- Unterscheidungssignalen von dem weiteren Nockensensor während der Zeit-dauer von der vorherigen Ausgabe und der momentanen Ausgabe von Zylinder- Unterscheidungssignalen von den jeweiligen Nockensensoren gezählt wird, und der spezifische Zylinder auf der Grundlage eines Unterschiedes in der Anzahl der Ausgaben unterschieden wird.

14. Zylinder- Unterscheidungsverfahren eines Motors nach Anspruch 12 oder 13, **dadurch gekennzeichnet, dass** der Takt der Eingabe der Zylinder- Unterscheidungssignalen gemessen wird, während Zylinder- Unterscheidungssignale ausgegeben von den jeweiligen Nockensensoren, nacheinander ein-gegeben werden, um den spezifischen Zylinder zu unterscheiden, auf der Grundlage eines Verhältnisses des zuletzt gemessenen Taktes und des vorher gemessenen Taktes und die Unterscheidung des Nockensensors, von dem das letzte Zylinder- Unterscheidungssignal ausgegeben worden ist.

15. Zylinder- Unterscheidungsverfahren eines Motors nach Anspruch 14, **dadurch gekennzeichnet, dass** der spezifische Zylinder unterschieden wird, wenn ein Wert, erhalten durch Dividieren des zuletzt gemessenen Taktes durch den vorher gemessenen Takt, einen Grenzwert überschreitet.

16. Zylinder- Unterscheidungsverfahren eines Motors nach zumindest einem der Ansprüche 12 bis 15, **dadurch gekennzeichnet, dass** die Zylinder, die nicht der spezifische Zylinder sind, auf der Grundlage der Ausgabe der Zylinder- Unterscheidungssignale von einem Nockensensor, der dem Zylinder entspricht, der unterschieden werden soll, unmittelbar nach der Unterscheidung des spezifischen Zylinders unterschieden werden.

17. Zylinder- Unterscheidungsverfahren eines Motors nach zumindest einem der Ansprüche 12 bis 15, **dadurch gekennzeichnet, dass** die Zylinder, die nicht der spezifische Zylinder sind, auf der Grundlage der Gesamtzahl der Ausgabe der Zylinder- Unterscheidungssignale von den jeweiligen Nockensensoren, unmittel-bar nach der Unterscheidung des spezifischen Zylinders, unterschieden werden.

18. Zylinder- Unterscheidungsverfahren eines Motors nach zumindest einem der Ansprüche 12 bis 17, **gekennzeichnet durch** die Schritte von:
Ausgeben eines Kurbelwinkelsignales von einem Kurbelwinkelsensor synchron mit der Drehung der Kurbelwelle, das in der Lage ist eine Referenz- Kurbelwinkelposition für jede Hubphasendifferenz zwischen den Zylindern zu erfassen;
Ausführen einer Fehlerdiagnose des Kurbelwinkelsensors;
Ausführen der Zylinder- Unterscheidung auf der Grundlage der erfassten Kurbel-winkelposition und der Zylinder- Unterscheidungssignale von dem Nockensensor, wenn der Kurbelwinkelsensor als normal diagnostiziert wird; und
Ausführen einer Zylinder- Unterscheidung auf der Grundlage von nur den Zylinder- Unterscheidungssignalen, ausgegeben von der Mehrzahl der Nockensensoren, nur dann, wenn der Kurbelwinkelsensor als normal diag-nostiziert wird.

19. Zylinder- Unterscheidungsverfahren eines Motors nach Anspruch 18, **gekennzeichnet durch** eine Einlassventil- Zeitpunktsteuervorrichtung für das Verändern eines Einlassventilzeitpunktes **durch** Verändern einer Drehphase einer einlassseitigen Nockenwelle auf der Einlassseite in Bezug auf die Kurbelwelle, um die Drehphase der einlassseitigen Nockenwelle auf den am meisten verzögerten Drehphasenwinkel zu steuern, wenn der Kurbelwinkelsensor als abnormal diagnostiziert wird.

20. Zylinder- Unterscheidungsverfahren eines Motors nach Anspruch 18 oder 19, **gekennzeichnet durch** eine Auslassventilzeitpunkt- Steuervorrichtung für das Verändem eines Auslassventilzeitpunktes **durch** Verändern einer Drehphase der auslassseitigen Nockenwelle in Bezug auf die Kurbelwelle, um die Drehphase der auslassseitigen Nockenwelle auf den am weitesten vorverstellten Drehphasenwinkel zu steuern, wenn der Kurbelwinkelsensor als abnormal diagnostiziert wird.

21. Zylinder- Unterscheidungsverfahren eines Motors nach zumindest einem der Ansprüche 12 bis 20, **dadurch gekennzeichnet, dass** die Zylinder- Unterscheidungssignale von Nockensensoren, montiert entsprechend jeder Bank in einem Motor vom V- Typ, ausgegeben werden.

22. Zylinder- Unterscheidungsverfahren eines Motors nach zumindest einem der Ansprüche 12 bis 21, **dadurch gekennzeichnet, dass** die Zylinder- Unterscheidungssignale von Nockensensoren, montiert entsprechend einer Nockenwelle auf der Einlassseite und einer Nockenwelle der Auslassseite, ausgegeben werden.

23. Zylinder- Unterscheidungsverfahren eines Motors nach Anspruch 13, wobei die Zylinder- Unterscheidungssignale von Nockensensoren, montiert entsprechend jeder Bank in einem Motor vom V- Typ, ausgegeben werden.

24. Zylinder- Unterscheidungsverfahren eines Motors nach Anspruch 13, wobei die Zylinder- Unterscheidungssignale von Nockensensoren, montiert entsprechend an einer Nockenwelle der Einlassseite und einer Nockenwelle auf der Auslassseite des Motors, ausgegeben werden.

## Revendications

1. Dispositif d'identification de cylindre d'un moteur comprenant :
une pluralité de capteurs de cames (6, 7) destinés à émettre des signaux d'identification de cylindres (Phase 1, Phase 2) ;
une unité d'identification de cylindres servant à identifier des cylindres sur la base desdits signaux d'identification de cylindres (Phase 1, Phase 2) émis par ladite pluralité de capteurs de cames (6, 7) ;
**caractérisé en ce que**
ladite pluralité de capteurs de cames (6, 7) est fournie afin d'émettre des signaux d'identification de cylindres (Phase 1, Phase 2) à chaque intervalle d'angle de manivelle irrégulier;
ladite unité d'identification de cylindre comprend une unité spécifique d'identification de cylindre servant à identifier un cylindre spécifique sur la base desdits signaux d'identification de cylindres (Phase 1, Phase 2) émis par ladite pluralité de capteurs de cames (6, 7); et
une unité non spécifique d'identification de cylindres servant à identifier des cylindres autres que ledit cylindre spécifique sur la base du résultat identifié dudit cylindre spécifique par ladite unité spécifique d'identification de cylindre et desdits signaux d'identification de cylindres (Phase 1, Phase 2) émis par lesdits capteurs de cames (6, 7),
dans lequel ladite unité spécifique d'identification de cylindre identifie un cylindre spécifique sur la base de caractéristiques de sortie de signaux d'identification de cylindres (Phase 1, Phase 2) émis par un autre capteur de came pendant un intervalle de temps compris entre une sortie précédente et une sortie courante de signaux d'identification de cylindres (Phase 1, Phase 2) émis par lesdits capteurs de cames respectifs.

2. Dispositif d'identification de cylindre d'un moteur selon la revendication 1,
**caractérisé en ce que** ladite unité spécifique d'identification de cylindre compte le nombre de sorties de signaux d'identification de cylindres en provenance dudit autre capteur de came pendant l'intervalle de temps compris entre la sortie précédente et la sortie courante de signaux d'identification de cylindres en provenance desdits capteurs de cames respectifs, et identifie le cylindre spécifique sur la base d'une différence de nombre desdites sorties.

3. Dispositif d'identification de cylindre d'un moteur selon la revendication 1 ou 2, **caractérisé en ce que** ladite unité spécifique d'identification de cylindre mesure le cycle d'entrée desdits signaux d'identification de cylindre tandis que les signaux d'identification de cylindres émis par les capteurs de cames respectifs sont séquentiellement introduits dans celle-ci, afin d'identifier le cylindre spécifique sur la base d'un rapport du cyde mesuré le plus récemment et du cyde mesuré précédemment, et de l'identification du capteur de came à partir duquel le signal d'identification de cylindre le plus récent a été émis.

4. Dispositif d'identification de cylindre d'un moteur selon la revendication 3,
**caractérisé en ce que** ladite unité spécifique d'identification de cylindre identifie le cylindre spécifique lorsqu'une valeur obtenue en divisant ledit cycle mesuré le plus récemment par ledit cyde mesuré précédemment dépasse une valeur seuil.

5. Dispositif d'identification de cylindre d'un moteur selon au moins une des revendications 1 à 4, **caractérisé en ce que** ladite unité non spécifique d'identification de cylindres identifie les cylindres autres que le cylindre spécifique sur la base du nombre de sorties de signaux d'identification de cylindres émis par un capteur de came correspondant au cylindre à identifier, immédiatement après l'identification du cylindre spécifique.

6. Dispositif d'identification de cylindre d'un moteur selon au moins une des revendications 1 à 4, **caractérisé en ce que** ladite unité non spécifique d'identification de cylindres identifie les cylindres autres que le cylindre spécifique sur la base du nombre total de sorties desdits signaux d'identification de cylindres émis par les capteurs de cames respectifs, immédiatement après l'identification du cylindre spécifique.

7. Dispositif d'identification de cylindre d'un moteur selon au moins une des revendications 1 à 6, **caractérisé par**
un capteur d'angle de manivelle destiné à émettre un signal d'angle de manivelle en synchronisation avec la rotation d'un vilebrequin, capable de détecter une position d'angle de manivelle de référence pour chaque différence de phase de course entre les cylindres ;
une unité d'identification de cylindres normale destinée à effectuer l'identification de cylindres sur la base de ladite position d'angle de manivelle de référence détectée et des signaux d'identification de cylindres émis par lesdits capteurs de cames ;
une unité de diagnostic des défaillances destinée à effectuer un diagnostic des défaillances dudit capteur d'angle de manivelle; et
une unité de sélection destinée à faire en sorte que ladite unité normale d'identification de cylindres effectue l'identification de cylindre lorsque ledit capteur d'angle de manivelle est diagnostiqué comme normal par ladite unité de diagnostic de défaillance, et à faire en sorte que ladite unité spécifique d'identification de cylindre et ladite unité non spécifique d'identification de cylindres effectuent l'identification de cylindres uniquement lorsque ledit capteur d'angle de manivelle est diagnostiqué comme étant anormal.

8. Dispositif d'identification de cylindre d'un moteur selon la revendication 7
**caractérisé par** un dispositif de commande de réglage de soupape d'admission servant à modifier le réglage de la soupape d'admission en modifiant une phase de rotation d'un arbre à cames côté admission par rapport au vilebrequin ; et
une unité de commande de l'angle de plus grand retard destinée à commander la phase de rotation dudit arbre à cames côté admission par rapport au vilebrequin vers l'angle de plus grand retard lorsque ledit capteur d'angle de manivelle est diagnostiqué comme étant anormal par ladite unité de diagnostic de défaillance.

9. Dispositif d'identification de cylindre d'un moteur selon la revendication 7 ou 8, **caractérisé par** un dispositif de commande de réglage de soupape d'échappement servant à modifier un réglage de soupape d'échappement en modifiant une phase de rotation d'un arbre à cames côté échappement par rapport au vilebrequin ; et une unité de commande de l'angle de plus grande avance destinée à commander la phase de rotation dudit arbre à cames côté échappement par rapport au vilebrequin vers l'angle de plus grande avance lorsque ledit capteur d'angle de manivelle est diagnostiqué comme étant anormal par ladite unité de diagnostic de défaillance.

10. Dispositif d'identification de cylindre d'un moteur selon au moins une des revendications 1 à 9, **caractérisé en ce que** lesdits capteurs de cames sont montés respectivement sur chaque ligne d'un moteur à cylindres en V.

11. Dispositif d'identification de cylindre d'un moteur selon au moins une des revendications 1 à 10, **caractérisé en ce que** lesdits capteurs de cames sont montés de façon correspondante sur chaque arbre à cames dans un moteur équipé d'un arbre à cames côté admission et d'un arbre à cames côté échappement.

12. Procédé d'identification de cylindre d'un moteur comprenant les étapes suivantes :
émission de signaux d'identification de cylindres (Phase 1, Phase 2) par une pluralité de capteurs de cames (6, 7) ;
identification de cylindres sur la base des signaux d'identification de cylindres émis par ladite pluralité de capteurs de cames (6, 7);
**caractérisé par**
rémission de signaux d'identification de cylindres (Phase 1, Phase 2) à chaque intervalle d'angle de manivelle irrégulier par la pluralité de capteurs de cames (6, 7);
l'identification d'un cylindre spécifique sur la base des signaux d'identification de cylindres émis par ladite pluralité de capteurs de cames (6, 7) ; et
l'identification de cylindres autres que ledit cylindre spécifique sur la base du résultat identifié dudit cylindre spécifique et desdits signaux d'identification de cylindres (Phase 1, Phase 2) en provenance desdits capteurs de cames (6, 7), où le cylindre spécifique est identifié sur la base de caractéristiques de sortie de signaux d'identification de cylindres (Phase 1, Phase 2) émis par un autre capteur de came pendant un intervalle de temps compris entre une sortie précédente et une sortie courante de signaux d'identification de cylindres (Phase 1, Phase 2) émis par lesdits capteurs de cames respectifs (6, 7).

13. Procédé d'identification de cylindre d'un moteur selon la revendication 12, **caractérisé en ce que** le nombre de sorties de signaux d'identification de cylindres en provenance dudit autre capteur de came est compté pendant l'intervalle de temps compris entre la sortie précédente et la sortie courante de signaux d'identification de cylindre émis par lesdits capteurs de cames respectifs, et le cylindre spécifique est identifié sur la base d'une différence de nombre desdites sorties.

14. Procédé d'identification de cylindre d'un moteur selon la revendication 12 ou 13, **caractérisé en ce que** le cycle d'entrée desdits signaux d'identification de cylindres est mesuré tandis que les signaux d'identification de cylindres émis par les capteurs de cames respectifs sont introduits séquentiellement afin d'identifier le cylindre spécifique sur la base d'un rapport du cycle mesuré le plus récemment et du cycle mesuré précédemment et de l'identification du capteur de came à partir duquel le signal d'identification de cylindre le plus récent a été émis.

15. Procédé d'identification de cylindre d'un moteur selon la revendication 14, **caractérisé en ce que** le cylindre spécifique est identifié lorsqu'une valeur obtenue en divisant ledit cycle mesuré le plus récemment par ledit cycle mesuré précédemment dépasse une valeur seuil.

16. Procédé d'identification de cylindre d'un moteur selon au moins une des revendications 12 à 15, **caractérisé en ce que** les cylindres autres que ledit cylindre spécifique sont identifiés sur la base du nombre de sorties des signaux d'identification de cylindres émis par un capteur de came correspondant au cylindre à identifier, immédiatement après l'identification dudit cylindre spécifique.

17. Procédé d'identification de cylindre d'un moteur selon au moins une des revendications 12 à 15, **caractérisé en ce que** les cylindres autres que ledit cylindre spécifique sont identifiés sur la base du nombre total de sorties desdits signaux d'identification de cylindres émis par les capteurs de cames respectifs, immédiatement après l'identification dudit cylindre spécifique.

18. Procédé d'identification de cylindre d'un moteur selon au moins une des revendications 12 à 17, **caractérisé par** les étapes suivantes :
émission d'un signal d'angle de manivelle par un capteur d'angle de manivelle, en synchronisation avec la rotation d'un vilebrequin, capable de détecter une position d'angle de manivelle de référence pour chaque différence de phase de course entre les cylindres ;
exécution d'un diagnostic de défaillance dudit capteur d'angle de manivelle ;
exécution d'une identification de cylindre sur la base de ladite position d'angle de manivelle de référence détectée et de signaux d'identification de cylindres émis par ledit capteur de cames lorsque ledit capteur d'angle de manivelle est diagnostiqué comme normal; et
exécution d'une identification de cylindre sur la base uniquement desdits signaux d'identification de cylindres émis par ladite pluralité de capteurs de cames seulement lorsque ledit capteur d'angle de manivelle est diagnostiqué comme étant anormal.

19. Procédé d'identification de cylindre d'un moteur selon la revendication 18, **caractérisé par** un dispositif de commande de réglage de soupape d'admission servant à modifier un réglage de soupape d'admission en modifiant une phase de rotation d'un arbre à cames côté admission par rapport au vilebrequin afin de commander la phase de rotation dudit arbre à cames côté admission vers l'angle de phase de rotation de plus grand retard lorsque ledit capteur d'angle de manivelle est diagnostiqué comme étant anormal.

20. Procédé d'identification de cylindre d'un moteur selon la revendication 18 ou 19, **caractérisé par** un dispositif de commande de réglage de soupape d'échappement servant à modifier un réglage de soupape d'échappement en modifiant une phase de rotation d'un arbre à cames côté échappement par rapport au vilebrequin afin de commander la phase de rotation dudit arbre à cames côté échappement vers l'angle de phase de rotation de plus grande avance lorsque ledit capteur d'angle de manivelle est diagnostiqué comme étant anormal.

21. Procédé d'identification de cylindre d'un moteur selon au moins une des revendications 12 à 20, **caractérisé en ce que** lesdits signaux d'identification de cylindres sont émis par des capteurs de cames montés de façon correspondante sur chaque ligne d'un moteur à cylindres en V.

22. Procédé d'identification de cylindre d'un moteur selon au moins une des revendications 12 à 21, **caractérisé en ce que** lesdits signaux d'identification de cylindres sont émis par des capteurs de cames montés de façon correspondante sur un arbre à cames côté aspiration et un arbre à cames côté échappement dudit moteur.

23. Procédé d'identification de cylindre d'un moteur selon la revendication 13, dans lequel lesdits signaux d'identification de cylindres sont émis par des capteurs de cames montés de façon correspondante sur chaque ligne d'un moteur à cylindres en V.

24. Procédé d'identification de cylindre d'un moteur selon la revendication 13, dans lequel lesdits signaux d'identification de cylindres sont émis par des capteurs de cames montés de façon correspondante sur un arbre à cames côté aspiration et un arbre à cames côté échappement dudit moteur.
